# EUROPEAN PATENT APPLICATION

(11) **EP 1 334 660 A1**
(43) Date of publication of application: **13.08.2003**
(21) Application number: 03001004.5
(22) Date of filing: 17.01.2003
(51) Int. Cl.: A01M 1/10, A01M 1/02

(54) **Improved trap for insects**

(30) Priority: 11.02.2002 IT PN20020007
(71) Applicant: Furlan, Lorenzo, 30027 San Donà di Piave, Venezia (IT)
(72) Inventor: Furlan, Lorenzo, 30027 San Donà di Piave, Venezia (IT); Gnes, Carlo, 30027 San Donà di Piave, Venezia (IT)
(74) Representative: Giugni, Valter

(57) **Abstract**

Trap to capture insects including a lower container, an upper funnel-shaped device with a lower unloading hole, one or more lures placed in the funnel, in which:
- said first lower container is in the shape of a frustum of cone and is provided, on its upper base, with an opening placed below said unloading hole of said funnel-shaped device;
- between the opening of said upper base and said lower unloading hole there is a duct connecting said lower container and said funnel-shaped device, which is provided with a series of predefined holes. The latter are placed along the lower portion of said duct. Below said first lower container can be placed a second container open in the upper part, at the level of the base of said first container.

## Description

The present invention regards an improved trap suitable for catching insects, particularly Agriotes adults.

As generally known, in Europe and probably in other regions all over the world many farmers apply soil insecticides to protect herbaceous crop seeds and seedlings in the first stages of development without any evaluation of the actual presence of economic larval populations.

Based on a survey of national and international literature Agriotes species are for sure the most widespread and potentially harmful soil pests (Furlan et al., 2000).

Several papers demonstrated that soils with economic populations, which need pest control, represent a small percentage of cultivated lands (Furlan, 1989, 1990, 1999), certainly less than 5%.

Furthermore the high and non-controlled use of soil insecticides on most cultivated lands, without any evaluation whether soil insect harmful populations are present or not, can cause soil pollution with possible implications for animals living off those soils and also for subsequent food chain, and therefore for human populations who have to use those soils for vegetable crops, or consuming animals which have fed directly or indirectly on plants cultivated in those fields.

Actually, without any further discussion about an issue which is already clear, soil treatments with insecticides applied according current techniques, therefore without any precise information about the real need, are ineffective from an economic point of view and dangerous for the environment.

In order to solve this problem several surveys to determine qualitative and quantitative presence of insects pests have been done.

Attracting and capturing insects by using specific ground traps appeared to be the simplest strategy to collect data about qualitative and quantitative presence of the insect pests cited above.

These traps are placed on the fields at definite distances and they work through the sex pheromones that attract the adults; in fact, the only stage that lives outside the soil are the adults, crawling or flying, and the sex pheromone (produced by the females) is very efficient in capturing these adults, particularly the males.

After a definite period the traps are inspected and the content observed; based on data obtained it is possible to draw a map concerning the insect infestation level and therefore to apply insecticides avoiding areas where the harmful species are not present.

Several kinds of traps have been studied and made known; some of them, e.g. in US 5,836,104 - EP 0095309 - US 5,081,788 - EP 1155614 - US 6,272,790, contain insecticides or other tools to kill captured insects and therefore they are not suitable for catching alive insects for research purposes.

JP 11189619 patent (application) regards a trap for catching insects by using pheromones; anyway this trap seems suitable for counting and killing captured insects; this is complicated and not reliable because of the presence of infra-red sensors which can be unexpectedly influenced by external conditions. Moreover the traps described above do not appear particularly effective in capturing both flying and crawling insects, because entrance holes for insects are not distinguished.

Patent JP 10244367 regards another type of trap for insects; anyway this kind of trap cannot effectively capture insects crawling on the ground and it is expensive because of the devices applied to kill and automatically to count the insects.

It is therefore a main purpose of the present invention to provide a trap for insects suitable for catching both flying and crawling insects, simple to construct and cheap, effective in capturing insects taking advantage of their instinctive reactions.

This purpose and other characteristics of the invention are achieved through a trap made and working according to the following claims.

The invention can be made according a preferential way but not limitative, here described in details with only an explanation purpose and not limitative, with reference to the attached drawings:
- Figure 1 shows a frontal view of a simplified trap made according the invention;
- Figure 2, shows a median vertical section of an improved trap generally made as described in Fig. 1;
- Figure 3 shows a magnification of a median vertical section of the trap shown in Fig. 2;
- Figure 4 shows a vertical section in perspective of the trap shown in Fig. 2.

With reference to the figures, a simplified kind of trap according the invention consists of a lower container (1), a funnel-device (2) placed above said container, and with an unloading hole (3) taking to a lower vertical duct (4).

The container 1 is so shaped as a frustum of cone, and on its upper base there is an opening 5, into which the lower "mouth" of said duct enters.

On the perimeter of said duct 4 there are many holes placed in the form of a ring which link the inside of said duct, and indirectly the inside of said container 1, to the outside.

The optimal size of the holes is determined to allow only target insects to enter, not other ones; moreover the external conic surface of the container 1 is provided with a plurality of reliefs 7 that make climbing and reaching the holes easier to insects.

The invention is built in such a way that the element 8 containing the pheromone, suitable for attracting the insects, can be placed in different positions between the funnel-device 1 and holes 6 so that the most efficient position can be used.

The base 12 guarantees a good adherence to the ground in order to make climbing easier for crawling insects; it has many holes that allow rain water to go out, at the same time preventing the smallest specimens belonging to the target species from getting out of the trap.

It will be now clear how the invention works; placed the trap on the ground, the insects will be attracted by the pheromone and go to the trap; crawling on the ground insects will climb the sloped sides of container 1, facilitated in this by said reliefs 7 which work as footholds. Once they have reached the upper part of the container only those with suitable size can enter the holes to try to get to the element 8 with the pheromone lure; anyway they cannot reach the pheromone because it is supported separately by the duct and the holes.

Without having any support the insects that have got into the duct fall down, through opening 5, into said container 1 from which they cannot escape because of several factors: the inner walls are smooth and with counterslope, the folding facing towards the inner part of the opening of the container 1 and the fact that the latter is empty and linked with the other parts with external devices without allowing captured insects to invention footholds.

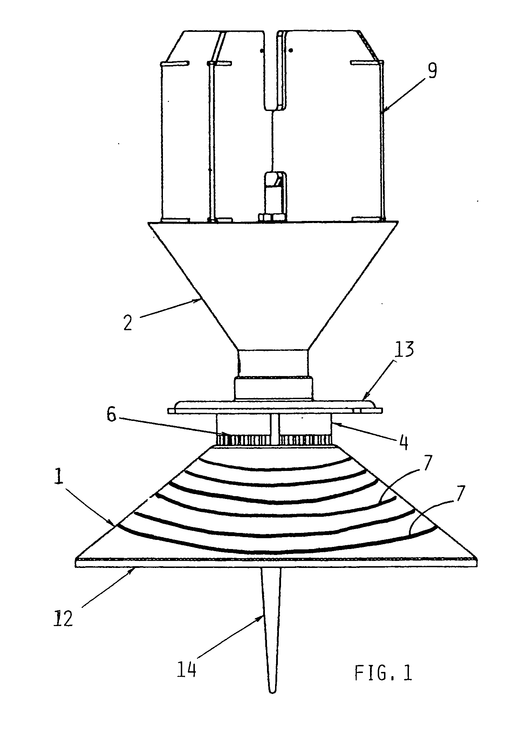

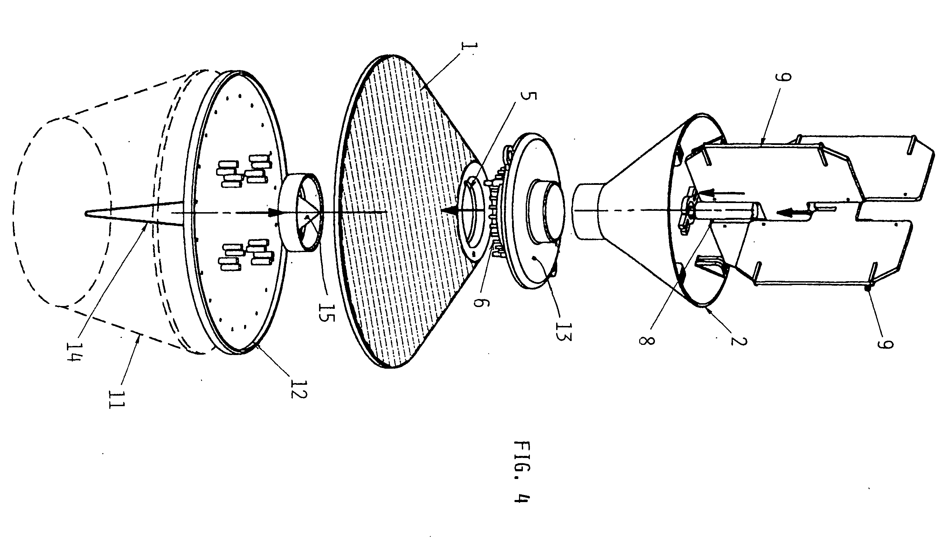

With reference to fig. 1 and 4, some further useful improvements of the invention are showed.

As to flying insects, they are also attracted into the inner part of said tube by the pheromone lures; a series of small wings or vertical surfaces 9 placed in different ways above said funnel 2 allow insects to be captured; when the insects move quickly above said funnel looking for the pheromone source they can easily collide with the vertical surfaces. Because of the crash a particular insect reaction occurs that is the insect that crashed into the vertical surfaces pretends itself dead and leave it to fall down; the fall takes the insect into the funnel and then into container 1 by gravity.

The funnel is made so that it can house several small winds (screens) to increase the possibility of collision for insects attracted by the pheromone.

A further improvement is given by the fact that all around said duct there is a ring-shaped surface that extends horizontally towards the outside or at an angle towards the base; said ring-shaped surface's aim is to create a further obstacle to the escape of insects which could possibly reach the top of said container 1 and near said holes, but that had not entered yet.

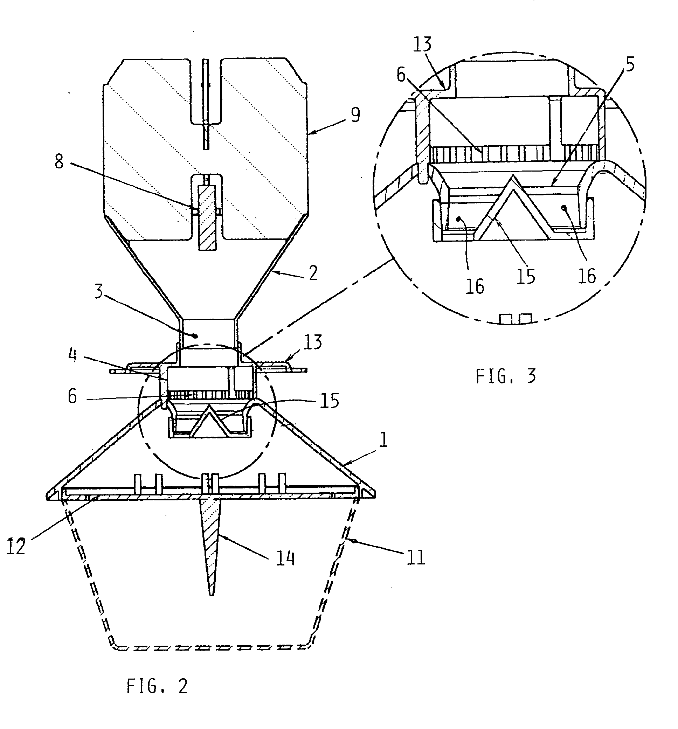

With reference to figure 2 and 3 another improvement is given by a second container 11, for example a cylindrical one, placed below the lower base 12, and communicating with the latter.

The aim of this container is the following: with its depth it keeps very efficiently the insects fallen down, which have few chances, from a statistical point of view, of finding the small exit hole by clicking or flying. Substantially the depth of this second container is a mortal trap that substitutes insecticides and any other special device to kill insects, and therefore solves in a sustainable, cheap and safe way the problems connected with insects killing, despite the fact it is very effective.

Moreover this second container can be placed completely underground, giving the double benefit of anchoring the trap to the soil and avoiding the creation of a stair between the ground and the trap that insects crawling into contact with the ground cannot overcome.

Another improvement is given by building the base of said first container 1 or of said second container (11), which is into contact with the ground, with a lower element (14), preferably pointed downwards and suitable for anchoring to the soil; it is particularly useful to avoid undesired trap movements, especially when the latter is simply laid on the ground with container 1.

With reference to Figure 3, a further improvement is given by adding to the upper part of container 1 a superficial obstacle (15), preferably built in the shape of a cusp, placed at the lower opening of said duct (4), whose optimal size and shape are determined to have a free horizontal ring-shaped passage 16 between it and said duct 4 or between it and said opening 5 of container 1.

The aim of said obstacle is to prevent the insects from getting out of container 1 by flying to said duct 4 and from the latter to outside.

Said obstacle cannot be placed lower than previously described because otherwise click beetles might fly just above said obstacle and easily find the opening 5, which would be completely open.

From the other side it has not to be placed in higher position, because it would interfere with lures 8 which should be lifted due to this; but this fact is in contrast with the necessity of keeping said lure 8 as close as possible to said holes 6, which are placed just at the bottom of said duct 4 as previously reported.

Moreover said ring-shaped passage 16 has to be large enough to allow the click beetles coming down from said duct to go through.

Cusp shape of said obstacle is finally needed to prevent insects, coming from high, from falling and staying on it, therefore without falling into said container and making full said ring-shaped passage 16.

A last improvement is obtained by making said first or second container, preferably their bases, of transparent material, to make checking of captured insect presence from outside easier.

### References

FURLAN L. - 1989 - Analisi delle possibilità di riduzione dell'impiego di geodisinfestanti nella coltura del mais nel Veneto. L'Informatore Agrario, 17, 107-115.

FURLAN L. - 1990 - Analisi della possibilità di riduzione dell'impiego dei geodisinfestanti nella bietola da zucchero. L'Informatore Agrario, 5, 73-80.

FURLAN L. - 1999 - Elateridi ed altri insetti terricoli: metodi di previsione. Il divulgatore, 7, 17 -26.

FURLAN L., CURTO G., FERRARI R., BORIANI L., BOURLOT G., TURCHI A. - 2000 - Wireworm species damaging crops in Po Valley. Informatore Fitopatologico, 5, 53 - 59.

## Claims

1. Trap to catch, without using insecticides, at the same time insects belonging both to flying and moving above and into contact with the ground groups, particularly suitable for catching specimens of genus Agriotes, including:
- a first lower container (1) to collect captured insects;
- an upper funnel-shaped device (2) with a lower unloading hole (3);
- one or more insect lures (8), particularly pheromone dispensers, placed above or inside said funnel device, **characterized in that**:
- said first container (1) is in the shape of a frustum of cone and, in the upper part, it has an opening (5) placed under said unloading hole of said funnel device;
- between said opening (5) of said upper base and said lower unloading hole there is a duct (4) suitable for closing the passage between said lower container (1) and said funnel device;
- said duct (4) has, at least along a portion of its perimeter, a series of holes (6) having predefined size.

2. Trap to capture insects according to claim 1, **characterized in that** said holes (6) are placed along the lower portion of said duct (4) attached or in any case close to the upper edge of said frustum of cone.

3. Trap according to claims 1 or 2 **characterized in that** at the base (12) of said first lower container is placed a second container (11) closed all around but open in the upper part facing the base of said first container (1).

4. Trap according to any of the previous claims, **characterized in that** said insect lures are in different shapes and particularly are in the shape of an elongated strip (8) and are placed in a suitable position in the space between the lower zone of said funnel-shaped device and said opening (5) of said container (1).

5. Trap like any of the previous claims, **characterized in that** in the upper part of said funnel-shaped device (2) there are several vertical surfaces (9) preferably flat.

6. Trap according to claim 5 **characterized in that** said vertical surfaces (9) are set at an angle each other.

7. Trap according to any of the previous claims **characterized in that** a longitudinal piece (14) is fixed outside the base of said first container (1) or said second container (11) to anchor the trap to the ground.

8. Trap according to any of the previous claims, **characterized in that** a ring- shaped element, which extends horizontally towards the outside or flared downward, is fixed in a position outside said duct (4) and above said holes (6).

9. Trap like any of the above claims, **characterized in that** at least a portion of said first container (1) or second container's (11) surface, preferably their bases, are made of transparent material.

10. Trap like any of the above claims, **characterized in that** the upper part of said first container (1) includes an obstacle element (15) that is made so that a ring-shaped passage (16) between it and said tube (4) or between it and said opening (5) is created.

11. Trap like claim 10, **characterized in that** said obstacle element (15) is in the shape of a cusp and faces upwards.
